Europäisches Patentamt

European Patent Office

Office européen des brevets

(11) Numéro de publication: **0 302 344 B1**

(12) **FASCICULE DE BREVET EUROPEEN**

(45) Date de publication de fascicule du brevet:
27.11.91

(51) Int. Cl.⁵: **B60C 7/14, B60B 9/26**

(21) Numéro de dépôt: 88111941.6

(22) Date de dépôt: 25.07.88

(54) **Bandage élastique non pneumatique.**

(30) Priorité: 04.08.87 FR 8711107

(43) Date de publication de la demande:
08.02.89 Bulletin 89/06

(45) Mention de la délivrance du brevet:
27.11.91 Bulletin 91/48

(84) Etats contractants désignés:
AT BE CH DE ES FR GB GR IT LI LU NL SE

(56) Documents cités:
EP-A- 0 206 181
FR-A- 1 372 593
FR-A- 1 408 508
GB-A- 183 765
US-A- 3 234 988

(73) Titulaire: COMPAGNIE GENERALE DES ETA-
BLISSEMENTS MICHELIN-MICHELIN & CIE
4, rue du Terrail
F-63000 Clermont-Ferrand(FR)

(72) Inventeur: Laurent, Daniel
23, avenue de la Plaine Fleurie
F-38240 Meylan(FR)

(74) Mandataire: Bauvir, Jacques et al
Michelin & Cie Service K. Brevets
F-63040 Clermont-Ferrand Cédex(FR)

## Description

La présente invention se rapporte aux bandages élastiques non pneumatiques, susceptibles d'être utilisés en substitution des pneumatiques sur les véhicules.

On a depuis longtemps essayé de concevoir de tels bandages non pneumatiques, c'est-à-dire fonctionnant sans air sous pression, afin de s'affranchir de tout problème posé par les crevaisons ou les diminutions de la pression de gonflage des pneumatiques. A titre d'exemple, on peut citer la proposition décrite dans le brevet US-A-2 517 475 ou US-A-3 234 988 correspondant au préambule de la revendication 1. L'objectif de la présente invention est de proposer un bandage non pneumatique dont les caractéristiques se rapprochent le plus possible de celles d'un pneumatique, notamment pour ce qui concerne le confort, la tenue de route, et le comportement sur route.

L'invention, selon la revendication 1, comprend un bandage élastique non pneumatique, comportant une pluralité d'éléments formant ressort disposés entre une zone d'ancrage sensiblement indéformable et une bande de roulement. Chacun desdits éléments formant ressort comporte 2 éléments de liaison et un bras, disposés de façon à former un quadrilataire

- dont deux sommets constituent les points d'ancrage desdits éléments, lesdits points d'ancrage étant immobiles par rapport à l'axe de rotation dudit bandage,
- dont deux autres sommets constituent les points d'attache dudit bras, mobiles par rapport à l'axe de rotation dudit bandage,

de telle sorte que

- le point d'attache radialement supérieur est relié au point d'ancrage radialement supérieur par l'un des éléments de liaison,
- le point d'attache radialement inférieur est relié au point d'ancrage radialement inférieur par l'autre des éléments de liaison.
- et que ledit bras est fixé à son extrémité radialement extérieure à la bande de roulement.

Les figures suivantes illustrent schématiquement l'invention :

- la figure 1 est une coupe selon un plan méridien, où l'on voit le bandage élastique selon l'invention,
- la figure 2 est une vue de côté dudit bandage,
- la figure 3 est une représentation partielle en perspective,
- les figures 4 et 5 illustrent une variante,
- la figure 6 illustre un détail de réalisation.

On pose les conventions suivantes pour la représentation des efforts exercés par le sol sur le bandage au niveau du centre de l'aire de contact avec le sol : X représente un effort moteur ou freineur (freineur si négatif), Y une sollicitation transversale, Z la charge verticale et X, Y, Z formant un trièdre direct.

Le bandage élastique 1 selon l'invention permet donc de reproduire, par des moyens non-pneumatiques, les caractéristiques essentielles d'un pneumatique en matière d'isolation du véhicule par rapport à la route (notion de confort liée à la déformation verticale d'un pneumatique) et en matière de guidage du véhicule sur la route (dans les directions longitudinales et transversales). Le bandage 1 est monté sur une roue 2 indéformable, c'est-à-dire dont on peut, en usage normal, négliger les déformations par rapport à celles du bandage lui-même. La roue 2 comporte un disque 20 assurant la solidarisation avec un moyeu non représenté. Elle comporte une pièce 22 tenant lieu de jante, c'est-à-dire supportant le bandage 1 déformable, donc permettant d'accrocher ce dernier à la roue 2. L'accrochage proprement dit est assuré par l'extrémité 220 de ladite pièce 22, par laquelle passent tous les efforts dus aux sollicitations provoquées en usage, sans qu'il en résulte de déformation notable.

La conception générale du bandage 1 élastique non pneumatique consiste à prévoir un grand nombre d'éléments 3 formant ressort, entre la roue 2 et une bande de roulement 4.

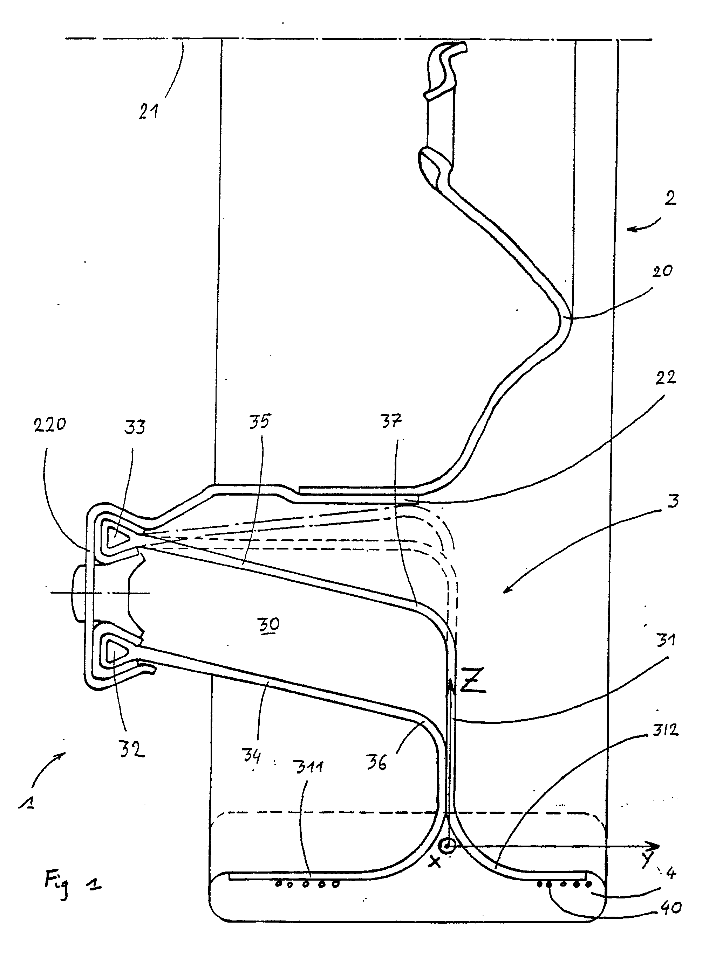

Chaque élément 3 est pour l'essentiel constitué par deux éléments de liaison 34, 35 et un bras 31, formant un quadrilatère. Le quadrilatère est défini par deux de ses sommets constituant les points d'ancrage 32 et 33 de l'élément 3 à la roue 2. Ces points d'ancrage 32 et 33 sont situés sur l'extrémité 220 de la jante 22, considérée comme indéformable. Ces points ne peuvent donc pas être déplacés par rapport à l'axe de rotation 21 de la roue 2, considérée comme système de référence. Deux éléments de liaison 34 et 35 guident le déplacement de deux points d'attache 36 et 37 par rapport auxdits points d'ancrage 32 et 33, donc par rapport à la roue 2. Ces points d'attache 36 et 37 constituent le support d'un bras 31 fixé, à son extrémité radialement extérieure, à la bande de roulement 4. L'une des fonctions principales du bandage 1 est d'être capable d'absorber des déformations verticales importantes. Ledit bras 31 est donc avantageusement orienté radialement et cela dicte la disposition précise du quadrilatère 30 qui, dans l'illustration de la figure 1, est proche d'un rectangle à l'état de charge nominale (schématisé en pointillé), qui se déforme en parallélogramme lorsque l'élément 3 considéré ne porte aucune charge (représentation en traits continus) ou aussi lorsque la déformation du bandage augmente (schématisation en traits mixtes). Pour des questions de symétrie de révolution et d'encombrement, chaque quadrilatère 30 est de préférence orienté de façon méridienne comme dans toutes les illustrations décrites.

Un telle disposition confère également la raideur souhaitable dans le sens transversal. Sous une sollicitation orientée axialement vers l'intérieur (roue à l'extérieur d'un virage), la structure va réagir par une flexion du bras 31, une compression de l'élément de liaison 34 radialement supérieur et une traction de l'autre élément de liaison 35.

Dans la réalisation illustrée à la figure 1, la capacité du bandage 1 à porter une charge provient de la réaction à la flexion des éléments de liaison 34 et 35 ou de l'un d'eux au moins. Toutes autres choses égales par ailleurs, on peut régler la réaction dans le sens vertical des éléments 3 en choisissant judicieusement la configuration des quatre sommets 32, 33, 36 et 37 du quadrilatère 30. Ainsi, comme illustré, les points d'ancrage 32 et 33 peuvent être des encastrements. Les points d'attache 36 et 37 peuvent déterminer des angles rigides, la matière consituant le bras 31 et les éléments de liaison 34 et 35 n'ayant pas de discontinuité ou singularité au droit desdits points d'attache autre que le changement de direction dans le plan méridien.

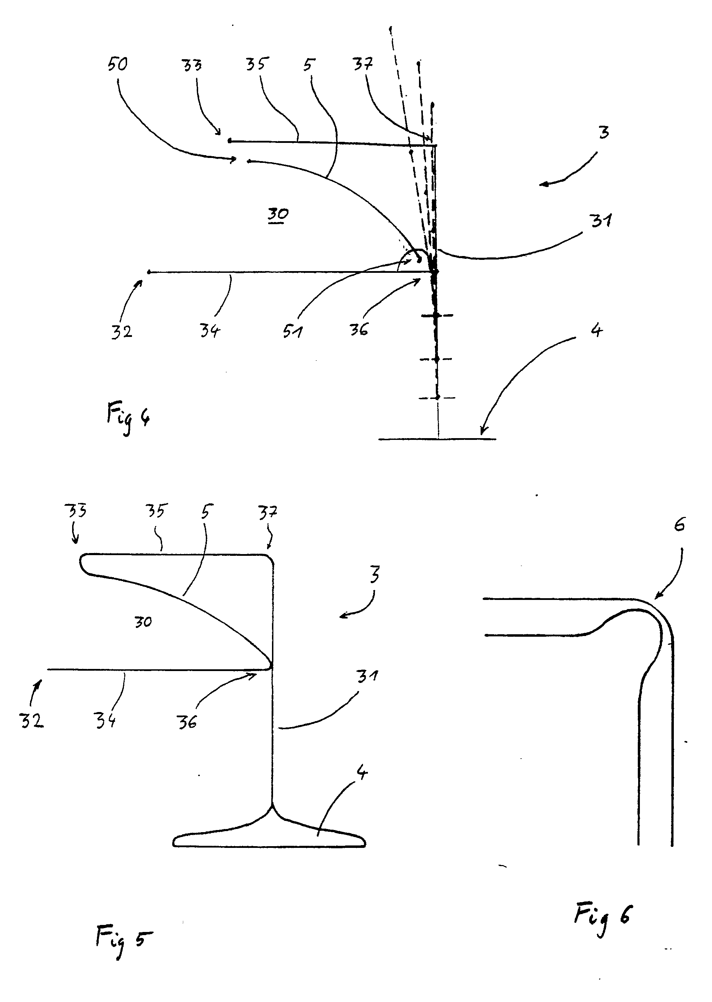

Chaque élément 3 peut par exemple être constitué de deux pièces (voir figure 1) dont l'une constitue l'élément de liaison 35, puis le point d'attache 37, puis le bras 31, et enfin un prolongement 312 du bras 31 participant à la solidarisation du bras 31 avec la bande de roulement 4. L'autre pièce constitue l'élément de liaison 34, le point d'attache 36, une partie du bras 31 puis le prolongement 311 de celui-ci participant à la solidarisation avec la bande de roulement 4. A l'état libre de toute contrainte, les pièces ont la configuration illustrée en traits pleins. Il résulte de ces choix (encastrements aux points d'ancrage 32 et 33, et angles rigides aux points d'attache 36 et 37) un mode de déformation des éléments de liaison 34 et 35 (en "S") et du bras 31 entre les points d'attache 36 et 37 (également en "S"), et donc une certaine flèche pour une charge verticale Z donnée. On peut assouplir les éléments 3 en disposant aux points d'attaches 36, 37, ou à l'un d'eux, une articulation ou une pseudo-articulation. On entend par pseudo-articulation toute disposition facilitant le déplacement angulaire relatif des pièces ou parties de pièces liées par la pseudo-articulation. Il s'agit dans la disposition la plus simple d'un amincissement local de la section (voir la référence 6 à la figure 6). Il peut s'agir aussi d'une pièce de jonction en caoutchouc du type silent-bloc. Il en résultera un autre mode de déformation (celui d'une poutre encastrée, et chargée à son extrémité) conduisant à une flèche plus grande de l'élément 3 pour la même charge.

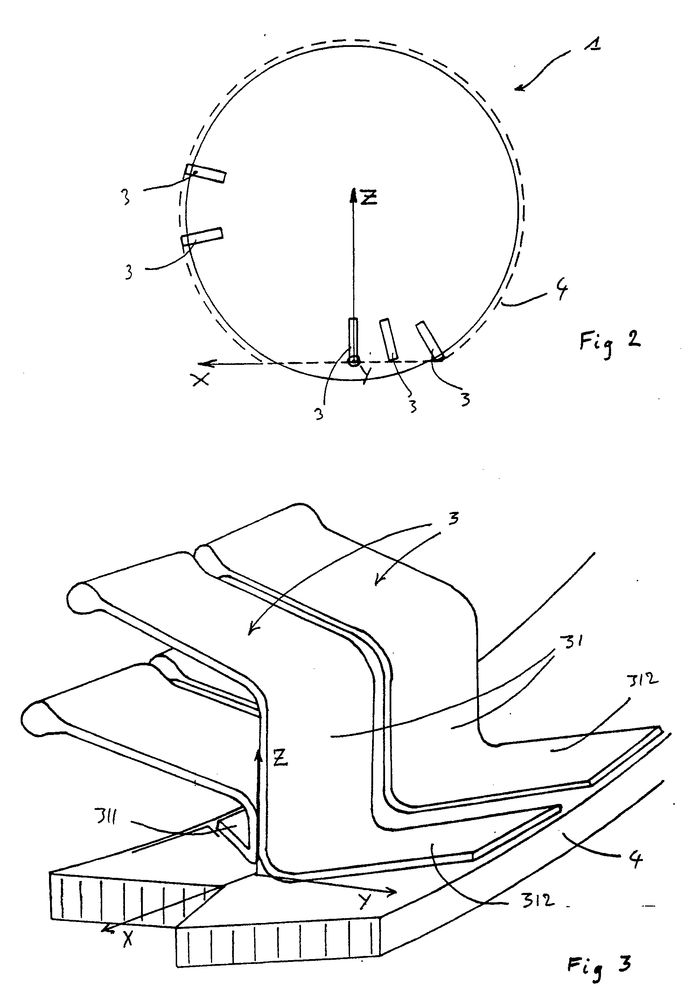

Un tel bandage doit encore être capable de transmettre un couple, c'est-à-dire un effort dans la direction de X. Chaque élément 3 ne doit donc admettre qu'une très faible ion sous une sollicitation de ce type. Pour concilier cet impératif avec les raideurs sous sollicitations dans les sens X et Y dont on a parlé ci-dessus, la section des éléments de liaison 34 et 35 et du bras 31 est rectangulaire et aplatie, la grande dimension de ladite section étant orientée perpendiculairement au plan méridien, comme cela apparaît à l'observation simultanée des figures 1 et 2, ou à la figure 3. Les éléments 3 formant ressort sont donc constitués par des lames dont la raideur à la flexion dans le plan méridien est faible, et dont la raideur à la flexion dans le plan de rotation est élevé.

De préférence, le contact du bandage 1 avec la route doit être, en roulage, aussi continu que possible. A cette fin, les prolongements 311 et 312 de chaque bras 31 sont disposés sensiblement dans un cylindre (lorsque le bandage ne porte aucune charge), et sont orientés de manière à former des chevrons. Cela signifie que la position angulaire de l'extrémité axiale de chacun des prolongements 311, 312 est différente de la position angulaire de l'extrémité radiale du bras 31 qu'ils prolongent, de manière à créer un certain recouvrement des appuis radiaux conférés par les éléments 3 formant ressort. La courbure de la bande de roulement 4 changeant au niveau et aux abords de la zone de contact avec le sol (voir figure 2), les prolongements 311 et 312 doivent pouvoir s'incliner par rapport au bras 31 qu'ils prolongent. Cela est favorisé en prévoyant un raccordement en forme d'arc de cercle, bien visible aux figures 1 et 3.

La bande de roulement 4 est continue circonférentiellement, et renforcée par des câbles 40, lui conférant un périmètre sensiblement constant comme c'est le cas dans les pneumatiques à carcasse radiale et à ceinture. Il peut en résulter, comme dans les pneumatiques usuels, une participation à la reprise de la charge de la zone du bandage ne correspondant pas à l'aire de contact avec la route. Pour conserver la longueur du périmètre, et selon sa capacité à résister à la compression longitudinale, la bande de roulement 4 agit en traction radialement sur les élements 3 se trouvant en dehors de la zone de contact (voir figure 2). On observe une participation de tous les éléments 3 à reprise de la charge. On remarque que là encore, on retrouve un comportement proche de celui du pneumatique. Le bandage proposé par la présente invention offre une très grande latitude de conception, allant jusqu'à la séparation complète de la bande de roulement en autant de petites semelles qu'il y a d'éléments 3 formant ressort. Il est également possible d'adopter dans les sculptures des perforations assurant l'évacuation de l'eau radialement vers l'intérieur sans devoir la dévier après coup dans une direction perpendiculaire à la direction radiale, comme c'est le cas avec les pneumatiques usuels.

Il faut noter que la structure du bandage proposée, lorsqu'elle est associée à une bande de roulement continue circonférentiellement, permet aussi de reproduire une déformation en dérive comparable à la déformation correspondante du pneumatique. On profite pour cela des déformations possibles sous sollicitation transversale de chaque élément 3 formant ressort, associées à la possible déformation en torsion des bras 31, même réalisés sous forme de lames, car de telles lames peuvent vriller en torsion de manière convenable. La structure proposée offre donc au concepteur la possibilité de retrouver un comportement fort proche de celui du pneumatique en jouant, pour le réglage des différentes caractéristiques recherchées, sur le dimensionnement des éléments de liaison 34 et 35, sur le dimensionnement du bras 31, et sur la détermination, pour les extrémités du quadrilatère, d'un fonctionnement choisi entre une articulation réelle, une pseudo-articulation 6, jusqu'à un angle rigide (encastrement.).

Avec un quadrilatère 30 en forme de parallélogramme (figure 1), un déplacement vertical de la bande de roulement 4 est inévitablement accompagné d'un déplacement latéral de celle-ci, lequel déplacement n'est négligeable que juste autour de la position où le quadrilatère est un rectangle, mais n'est pas négligeable sur la totalité du débattement souhaitable, compte tenu du faible encombrement disponible pour l'ensemble, devant de préférence se loger dans le même espace qu'un pneumatique. Pour supprimer cet inconvénient, la longueur des deux éléments de liaison 34 et 35, la position des points d'ancrage 32 et 33 et l'écartement relatif des points d'attache 36 et 37 sont déterminés de manière à ce que ledit bras 31, sous sollicitation radiale pure, se déplace de telle façon que le point de jonction avec la bande de roulement ne se déplace que radialement. Ainsi, par une correction cinématique dont un exemple est illustré par la figure 4, on peut rendre les déplacements latéraux induits au niveau de la bande de roulement suffisamment négligeables.

A titre d'exemple, on peut réaliser un élément 3 de ce type à partir d'une seule pièce, comme illustré par la figure 5, ladite pièce formant successivement l'élément de liaison intérieur 34, un élément élastique 5 (dont le rôle est expliqué ci-dessous), l'élément de liaison supérieur 35 puis le bras 31. Les jonctions sont conçues de manière à former des articulations ou des pseudo-articulations 6 aux quatre sommets du quadrilatère 30 et aux extrémités de l'élément élastique 5, en prévoyant notamment une liaison adéquate entre le bras 31 et l'élément de liaison inférieur 34. Les pseudo-articulations 6 sont illustrés par la figure 6 d'où il apparaît que, par un amincissement de la section, on diminue localement de façon très importante le moment d'inertie à la flexion, au moins dans le plan où l'on veut autoriser un mouvement angulaire relatif.

Chaque élément 3 formant ressort, conçu selon les indications données ci-dessus présente une courbe d'effort (Z) en fonction du déplacement (déflexion verticale) ayant l'allure d'une droite dont la pente donne la flexibilité du ressort. Depuis l'avant jusqu'à l'arrière de la zone de contact avec la route, la flexion desdits éléments 3 varie entre un minimum aux extrémités et un maximum au centre (voir figure 2). La pression de contact au sol a donc l'allure d'une parabole. Or si un pneumatique se comportait comme une membrane, la pression de contact au sol serait sensiblement constante, égale à la pression de gonflage. Cette caractéristique souhaitable en elle-même n'est le plus souvent pas atteinte, compte tenu des contraintes de conception inéluctables pour conférer aux pneumatiques une endurance suffisante. Un autre but de l'invention est de permettre d'atteindre cette caractéristique. A cette fin, on dispose, dans chaque élément 3 formant ressort, un élément élastique 5 supplémentaire, entre la zone d'ancrage, au point 50, et un point 51 de l'élément 3 mobile par rapport à ladite zone d'ancrage. Si l'on souhaite obtenir un effet de pression de contact au sol sensiblement constant, le quadrilatère 30 doit jouer un rôle essentiellement guideur, donc les points d'ancrage 32, 33 et d'attache 36, 37 sont des pseudo-articulations 6, comme illustré par la figure 6. L'élément élastique 5 est un ressort ancré, comme visible à la figure 3, d'une part au voisinage du point d'ancrage 33 radialement intérieur et d'autre part au voisinage du point d'attache radialement extérieur 36. Ce ressort 5 est constitué par une lame, sollicitée de bout en flexion-compression (rapprochement des points 50 et 51). Cette lame est sollicitée de manière excentrée, ou comporte un cintrage initial à l'état non sollicitée, pour maîtriser le sens dans lequel elle se déforme. Compte tenu de la relative constance de l'effort de réaction d'une lame sous ce mode de sollicitation, et de la correction cinématique apportée par le choix de l'implantation des points 50 et 51 d'extrémités dudit élément élastique 5, chaque élément 3 se comporte dans le sens vertical, comme un ressort à pente nulle. La charge Z est donc reprise par une flexion progressive du bandage, multipliant le nombre d'éléments 3 intervenant jusqu'à reprise complète de ladite charge. Dans le cas où la bande de roulement 4 est de périmètre sensiblement constant, il importe que les éléments 3 puissent accepter au moins un léger allongement radial et apporter leur contribution à la reprise de la charge.

On voit donc que la structure proposée permet de se rapprocher très fort du comportement d'un pneumatique, et qu'elle permet en outre au concepteur de régler séparément les différentes caractéristiques de raideur à la déformation selon les trois axes, et à la rotation autour des trois mêmes axes, en jouant' sur le dimensionnement des lames et sur le choix des articulations constituant les sommets du quadrilatère. Cela permet de réaliser des éléments 3 formant ressort qui soient suffisamment endurants pour résister à l'environnement agressif dans lequel ils sont appelés à fonctionner.

**Revendications**

1. Bandage élastique (1) non pneumatique, comportant une pluralité d'éléments (3) formant ressorts disposés entre une zone d'ancrage (220) sensiblement indéformable et une bande de roulement (4),
   chacun desdits éléments (3) formant ressort comporte deux éléments de liaison (34, 35) et un bras (31), disposés de façon à former un polyèdre dont
   - deux sommets constituent les points d'ancrage [(32), (33)] desdits éléments (3), lesdits points d'ancrage étant immobiles par rapport à l'axe de rotation (21) dudit bandage,
   - un autre sommet constitue un premier point d'attache (36) dudit bras (31), mobile par rapport à l'axe de rotation (21) dudit bandage,
   de telle sorte que
   - le premier point d'attache (36) est relié au point d'ancrage (32) radialement supérieur (extérieur) par l'un desdits éléments de liaison (34),
   - et que ledit bras (31) est fixé à son extrémité radialement extérieure à la bande de roulement (4).
   caractérisé en ce que
   - le polyèdre est un quadrilatère, et
   - que le 2ème point d'attache (37) radialement inférieur (intérieur) est relié au point d'ancrage (33) radialement inférieur (intérieur) par l'autre desdits éléments de liaison (35)

2. Bandage selon la revendication 1, caractérisé en ce que chaque dit quadrilatère (30) est orienté de façon méridienne.

3. Bandage selon la revendication 2, caractérisé en ce que la section desdits éléments de liaison [(34), (35)] et dudit bras (31) est rectangulaire et aplatie, la grande dimension de ladite section étant orientée perpendiculairement au plan méridien.

4. Bandage selon l'une des revendications 1 à 3, caractérisé en ce que la jonction avec la bande de roulement (4) est assurée par deux prolongements [(311), (312)] de chaque bras (31), tous les prolongements étant disposés sensiblement dans un cylindre et orientés de manière à former des chevrons.

5. Bandage selon les revendications 3 et 4, caractérisé en ce que le raccordement entre chaque prolongement [(311), (312)] et ledit bras (31) est en forme d'arc de cercle.

6. Bandage selon l'une des revendications 1 à 5, caractérisé en ce que la longueur des deux éléments de liaison [(34), (35)], la position des points d'ancrage [(32), (33)] et l'écartement relatif des points d'attache [(36), (37)] sont déterminés de manière à ce que ledit bras (31), sous sollicitation radiale pure, se déplace de telle façon que le point de jonction avec la bande de roulement ne se déplace que radialement.

7. Bandage selon l'une des revendications 1 à 6, caractérisé en ce que au moins l'un des sommets dudit quadrilatère est constitué par une pseudo-articulation (6).

8. Bandage selon l'une des revendications 1 à 7, caractérisé en ce que chaque élément (3) comporte un élément élastique (5) supplémentaire disposé entre la zone d'ancrage et un point dudit élément (3) mobile par rapport à ladite zone d'ancrage.

9. Bandage selon la revendication 8 caractérisé en ce que ledit élément élastique (5) est constitué par une lame sollicitée de bout.

10. Bandage selon l'une des revendication 8 ou 9, caractérisé en ce que chaque élément (3) formant ressort comporte une pente nulle dans sa caractéristique donnant l'effort engendré en fonction du déplacement dans le sens vertical de la bande de roulement (4).

**Claims**

1. Non pneumatic elastic tire (1) comprising a plurality of elements (3) forming springs disposed between a nondeformable anchoring zone (220) and a tread (4), each one of said plurality of elements (3) forming springs comprising two connecting elements (34, 35) and an arm (31) disposed so that they assume the shape of a polyhedral wherein

- two vertices of each one of said polyhedral constitute anchoring points [(32), (33)] for said elements (3), said anchoring points being immobile in relation to the axis of rotation (21) of said non pneumatic elastic tire ;
- another vertice constitutes a first attachment point (36) for the said arm (31), said attachment point being mobile in relation to the axis of rotation (21) of said nondeformable wheel, whereby ;
- the first attachment point (36) is connected to the exterior radially upper anchoring point (32) by one of said connecting elements (34) ;
- the second attachment point (37) is connected to the interior radially lower anchoring point (32) by one of said connecting elements (34),
- and the said arm (31) is connected at its radially exterior end (31) to the tread (4),

characterized by the fact that said polyhedral is a quadrilateral, and by the fact that the second radially interior attachment point (37) is connected to the interior radially lower anchoring point (33) by the other of said connecting elements (35).

2. A non pneumatic elestic tire according to claim 1,characterized by the fact that each one of said quadrilaterals (30) is oriented in a meridian way.

3. A non pneumatic elastic tire according to claim 2, characterized by the fact that the section of said connecting elements [(34), (35)] and of said arm (31) are rectangular and flat, the large dimensions of said sections being oriented perpendicular to the meridian plane.

4. A non pneumatic elastic tire according to one of claims 1 to 3, characterized by the fact that the junction with said tread (4) is assured by two extensions [(311), (312)] of each arm (31), all the extensions being placed at least approximately in a cylinder and being oriented so as to form chevrons.

5. A non pneumatic elastic tire according to claims 3 and 4, characterized by the fact that the connection between each extension [(311), (312)] and the said arm (31) is arc-shaped.

6. A non pneumatic elastic tire according to one of claims 1 to 5, characterized by the fact that the length of said connecting elements [(34), (35)], the position of said anchoring points [-(32), (33)] and the relative separation of said attachment points [(36), (37)] are determined so that said arm (31), under pure radial stress, moves in such a way that the point of junction with said tread is moved only radially.

7. A non pneumatic elastic tire according to one of claims 1 to 6, characterized by the fact that at least one of the vertices of each one of said quadrilaterals is composed of a pseudojoint (6).

8. A non pneumatic elastic tire according to one of claims 1 to 7, characterized by the fact each element (3) comprises an additional elastic element (5) placed between the anchoring zone and a point of that element (3) that is mobile in relation to its anchoring zone.

9. A non pneumatic elastic tire according to claim 8, characterized by the fact that said elastic element (5) consists of a blade stressed at its end.

10. A non pneumatic elastic tire according to one of claims 8 or 9, characterized by the fact that each element (3) forming a spring has a zero slope in its characteristic giving the force produced as a function of the movement in the vertical direction of said tread (4).

## Patentansprüche

1. Druckloser elastischer Reifen (1), der eine Vielzahl Federn bildender Elemente (3) aufweist, die zwischen einer Verankerungszone (220), die im wesentlichen undeformierbar ist und einer Lauffläche (4) angeordnet sind, wobei jedes der Federn bildenden Elemente (3) zwei Verbindungselemente (34, 35) und einen Arm (31) aufweist, die so angeordnet sind, daß sie einen Polyeder bilden, wobei

- zwei Ecken die Verankerungspunkte [(32), (33)] der Elemente (3) bilden, wobei die Verankerungspunkte bezüglich der Drehachse (21) des Reifens unbeweglich sind,
- ein weiteres Eck einen ersten Verbindungspunkt (36) des Armes (31) bildet, der bezüglich der Drehachse (21) des Reifens beweglich ist,

sodaß

- der erste Verbindungspunkt (36) mittels eines der Verbindungselemente (34) mit dem radial oberen (äußeren) Verankerungspunkt (32) verbunden ist,
- und daß der Arm (31) an seinem radial
äußeren Ende mit der Lauffläche (4) verbunden ist,
dadurch gekennzeichnet, daß
- der Polyeder ein Viereck ist und
- daß der zweite radial untere (innere) Verbindungspunkt (37) mittels des anderen
der Verbindungselemente (35) mit dem
radial unteren (inneren) Verankerungspunkt (33) verbunden ist.

2. Reifen nach Anspruch 1, dadurch gekennzeichnet, daß das Viereck (30) meridian angeordnet ist.

3. Reifen nach Anspruch 2, dadurch gekennzeichnet, daß der Querschnitt der Verbindungselemente [(34), (35)] und des Armes (31)
rechteckig und abgeplattet ist, wobei die große
Abmessung des Querschnittes rechtwinkelig
zur Meridianebene angeordnet ist.

4. Reifen nach einem der Ansprüche 1 bis 3,
dadurch gekennzeichnet, daß die Verbindung
mit der Lauffläche (4) durch zwei Verlängerungen [(311), (312)] jedes Armes (31) gesichert
ist, wobei alle Verlängerungen im wesentlichen
in einem Zylinder angeordnet sind, und so
gerichtet sind, daß sie Pfeilform aufweisen.

5. Reifen nach den Ansprüchen 3 und 4, dadurch
gekennzeichnet, daß die Verbindung zwischen
jeder Verlängerung [(311), (312)] und dem Arm
(31) Kreisbogenform aufweist.

6. Reifen nach einem der Ansprüche 1 bis 5,
dadurch gekennzeichnet, daß die Länge der
beiden Verbindungselemente [(34), (35)], die
Lage der Verankerungspunkte [(32), (33)] und
der relative Abstand der Verbindungspunkte [-
(36), (37)] so bestimmt wird, daß der Arm (31)
sich unter rein radialer Beanspruchung so verschiebt, daß der Verbindungspunkt mit der
Lauffläche sich nur radial verschiebt.

7. Reifen nach einem der Ansprüche 1 bis 6,
dadurch gekennzeichnet, daß zumindest eine
der Ecken des Viereckes durch ein Pseudogelenk (6) gebildet wird.

8. Reifen nach einem der Ansprüche 1 bis 7,
dadurch gekennzeichnet, daß jedes Element
(3) ein zusätzliches elastisches Element (5)
aufweist, das zwischen der Verankerungszone
und einem bezüglich dieser Verankerungszone
beweglichen Punkt des Elementes (3), angeordnet ist.

9. Reifen nach Anspruch 8, dadurch gekennzeichnet, daß das elastische Element (5) aus
einer Lamelle besteht, die auf Druck beansprucht wird.

10. Reifen nach einem der Ansprüche 8 oder 9,
daduroh gekennzeichnet, daß jedes eine Feder
bildende Element (3) in seiner Federkennlinie,
die die aufgebrachte Last in Abhängigkeit von
der Verschiebung in der Richtung vertikal zur
Lauffläche (4) angibt, einen Nullanstieg hat.

Fig 1

Fig 2

Fig 3

50  33  35  5  37

3

*30*

31

32  34  51  36

4

Fig 4

33  35  5  37

6

3

30

31

32  34  36

4

Fig 5

Fig 6